# EUROPEAN PATENT SPECIFICATION

(11) **EP 1 747 833 B1**
(45) Date of publication and mention of the grant of the patent: **19.01.2011**
(21) Application number: 06117721.8
(22) Date of filing: 24.07.2006
(51) Int. Cl.: B23G 1/04, B23G 3/00

(54) **Device for making holes in moulding operations**
Bohrer für Giessformverfahren
Dispositif pour la réalisation de trous lors d'opérations de moulage

(30) Priority: 29.07.2005 IT MI20051494
(43) Date of publication of application: 31.01.2007
(73) Proprietor: Silipigni, Lillo, 20060 Cassina De' Pecchi MI (IT)
(72) Inventor: Silipigni, Lillo, 20060 Cassina De' Pecchi MI (IT)
(74) Representative: De Gregori, Antonella

(56) References cited:
- EP-A1- 1 279 456
- EP-A2- 1 468 772
- US-A- 5 733 198

## Description

The present invention relates to a device for making holes in moulding operations.

It is known that in moulding operations, in addition to the shearing phase of the desired pieces, there is the necessity of tapping some of the holes formed.

Various devices have been developed for almost contemporaneously effecting this operation, consisting of parts constrained to the mobile section of the press and parts constrained to the base of the press carrying the piece to be moulded.

There is generally the presence of a mandrel with a vertical axis holding a fixed male which intervenes for threading the holes previously sheared or moulded. This also requires a mechanical transmission group which is capable of transforming the descending and ascending movement of the mobile section of the press into a rotating movement of the male mentioned above. One of the types which have long been used is that normally called "lead screw".

Other types of systems are also currently envisaged, such as, for example pneumatic male advance systems.

The systems so far used, however, do not allow high operating rates and require a certain maintenance for operating with a certain precision and continuity.

It should also be pointed out that in the known systems, during the tapping operations, the pitch of the thread constrains the descent of the tool: the mandrel should therefore be produced, each time, for the specific male to be housed, destined for the required tapping operation.

EP1468772 discloses a device for making holes according to the preamble of claim 1.

An objective of the present invention is to provide an improved device for making holes in moulding operations which solves the technical problems described above.

A further objective of the present invention is to provide an improved device for making holes in moulding operations which is simple, can also operate at high operating rates and does not require maintenance interventions for its correct functioning.

Another objective of the present invention is to provide an improved device for making holes in moulding operations which can operate without problems arising from the variation in the pitch of the male to be used.

These objectives according to the present invention are achieved by providing a device for making holes in moulding operations as specified in claim 1.

The subsequent claims define the additional characteristics of the present invention.

The characteristics and advantages of an improved device for making holes in moulding operations which according to the present invention will appear more evident from the following illustrative and nonlimiting description, referring to the enclosed schematic drawings, in which:
figure 1 is a perspective view of an improved device for making holes in moulding operations according to the invention in a rest position;

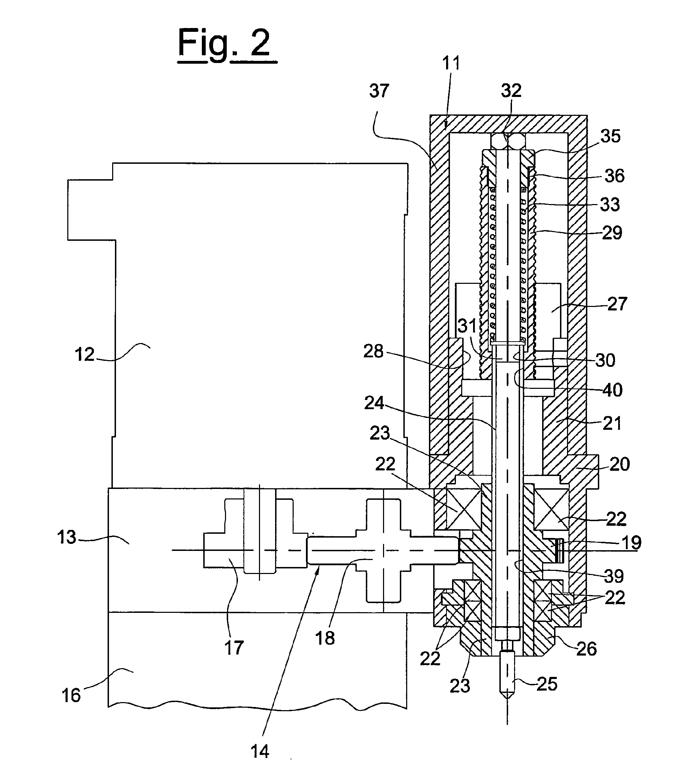

figure 2 is a raised section of the device as shown in figure 1 assembled on a constraining support (partially shown) to a mould (not shown);

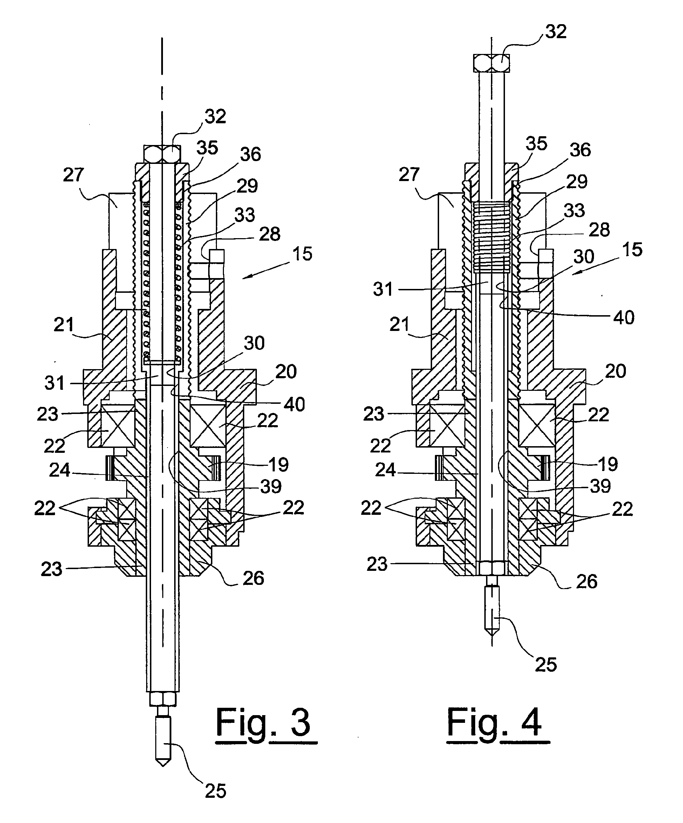

figure 3 shows only a sectional detail of what is illustrated in figure 1 in a maximum excursion operating position;
figure 4 shows a view similar to that of figure 3 in which the maximum intervention of the recovery spring is effected in the maximum excursion position.

With reference to the figures, these show an improved device for making holes in moulding operations according to the present invention, indicated as a whole with 11.

The device comprises an actuator 12, for example, in the form of an electric motor, constrained on a framework 13 containing a transmission 14 for the activation of the mandrel group 15.

In particular, the framework 13, which is constrained by means of a bracket or suitable support, schematized in 16, to a mould (not shown), contains the transmission 14 which, for example, comprises two gears 17, 18, of which the second gear 18 is engaged on a third gear of the mandrel 19.

The mandrel group 15 is positioned between a flange 20 of a body of the mandrel 21 on the framework 13. The gear of the mandrel 19 is supported in idle by means of its opposite extensions 23 on bearings 22. Said gear of the mandrel 19 is internally perforated with a square section in 39, thus housing a male-holder rod 24, with an outer square section, which is constrained to rotate but free to slide axially and at whose outer free end a male 25, having a pitch selected for the required operation, is operatively constrained each time.

The body of the mandrel 21 is also internally hollow to receive the various constituent elements. It is closed below at its opposite ends by a bearing-holding ferrule 26 in an externally threaded portion 28 of the body of the mandrel 21. The body of the mandrel 21, on the other hand, is closed above by a ball-recirculation screw-internal thread group which controls the descent and ascent with the interposition of an elastic element, such as a spring, for the recovery of the difference in pitch between the male 25 and ball-recirculation screw-internal thread group. More specifically, said screw-internal thread group comprises a ball-recirculation split nut 27, housed in a respective specific seat 28 blocked with respect to the body of the mandrel 21. Inside and coupled with said ball-recirculation split nut 27, a ball-recirculation screw 29 slides, which is also internally hollow but having one of its ends with an internal square section 40 suitable for being coupled with a complementary outer square section of the male-holder rod 24.

At the end facing the inside of the mandrel group 15, the male-holder rod 24 has a threaded seat 30 for receiving a threaded end 31 of a neck screw 32. A spring 33 surrounds the neck screw 32 and is joined on one side to the end of the male-holder rod 24 and on the other side to a stopper 35 constrained by means of threading 36 inside the ball-recirculation screw 29, also equipped with complementary threading 36.

A mechanical run-end such as a lid 37 of the mandrel group 15 can be envisaged, or an electric run-end, such as a switch (not shown), which however collaborates with an outer head of the neck screw 32.

The functioning of the improved device for making holes in moulding operations according to the present invention is extremely simple.

Once the device of the invention has been positioned with respect to a mould (not shown) by means of the specific bracket or support, schematized in 16, the device is ready to operate.

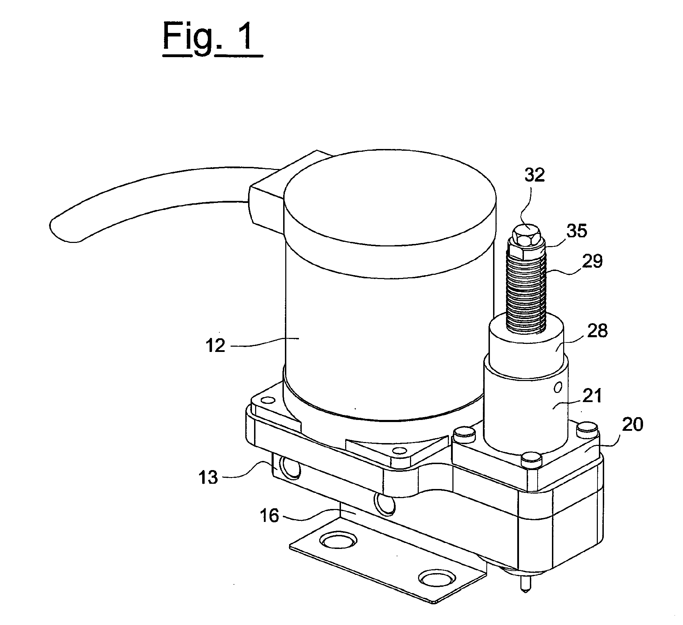

From the rest position of figure 1, in fact, the activation of the motor 12 when required and selected, allows the mandrel group to intervene to thread a hole (not shown) previously formed.

The activation of the motor 12 transmits movement to the transmission 14, i.e. to the gears 17 and 18, which in turn cause the rotation of the gear of the mandrel 19.

This rotation causes the rotation of the male-holder rod 24 with the interaction of the male 25 selected with the hole (not shown). The spring 33 pushes the male causing it to tap the hole.

The rotation continues until the whole hole has been tapped and the maximum excursion position has been reached. During this operation, if the pitch of the male, as often occurs, is different from the pitch of the ball-recirculation split nut 27 and relative ball-recirculation screw 29, the presence of the spring 33 and male-holder rod 24 constrained to the neck screw 32, allows the difference in pitch to be recovered by the internal sliding of the ball-recirculation screw 29.

It can consequently be observed that this arrangement of the telescopic type with a relative spring absorbs the difference in pitch between the ball-recirculation split nut 27 and relative ball-recirculation screw 29, which are present on the device of the invention, and the male 25 with a pitch selected for the particular operation. The difference is thus compensated.

In this way, it is possible to maintain high operating rates without any problem, a condition which cannot be obtained with devices of this type so far known.

The presence of the ball circulation coupling eliminates any kind of sliding friction which represented a limit for the known devices. This reduces maintenance interventions to the minimum on the improved device for making holes in moulding operations of the present invention.

The improved device for making holes in moulding operations of the present invention thus conceived can undergo numerous modifications and variants.

Furthermore, in practice, the materials used, as also the dimensions and components, can vary according to technical demands.

## Claims

1. A device for making holes in moulding operations comprising an actuator (12) constrained on a framework (13) containing a transmission (14) for the activation of a mandrel group (15), wherein said mandrel group (15) comprises a male-holder rod (24) at whose free end a male (25) is outwardly constrained each time, said male-holder rod (24) and said male (25) being rotated by said actuator (12), wherein said male-holder rod (24) is constrained so as to rotate but is free to slide axially inside a screw-internal thread group (27, 29) which controls the descent and ascent with the interposition of a spring (33) for the recovery of the difference in pitch between said male and said screw-internal thread group (27, 29), said spring (33) being interposed between an end of said male-holder rod (24) and an end of said screw (29), **characterized by** said ball-recirculation screw-internal thread group comprising a ball-recirculation screw-female split nut (27), housed in a body of the mandrel (21) and a ball-recirculation screw (29) operatively associated with the rotation but free to slide axially with respect to said male-holder rod (24); and by said spring (33) resting on a stopper (35) constrained by means of threading (36) inside said ball-recirculation screw (29).

2. The device according to claim 1, **characterized in that** said male-holder rod (24) is connected to a neck screw (32).

3. The device according to claim 1, **characterized in that** said transmission (14) for the activation of a mandrel group (15) comprises a mandrel gear (19) which is supported in idle by means of its opposite extensions (23) on bearings (22) and which is internally perforated with a square section (in 39), thus housing said male-holder rod (24), with an outer square section, which is constrained to rotate but free to slide axially.

## Patentansprüche

1. Bohrer für Gießformverfahren, der einen Aktuator (12) umfasst, der an einem Rahmen (13) angebracht ist, der ein Getriebe (14) zum Antreiben einer Spanndorneinheit (15) enthält, wobei diese Spanndorneinheit (15) eine Gewindebohrer-Haltestange (24) umfasst, an deren freiem Ende jeweils außen ein Gewindebohrer (25) angebracht ist, wobei die Gewindebohrer-Haltestange (24) und der Gewindebohrer (25) durch den Aktuator (12) gedreht werden, wobei die Gewindebohrer-Haltestange (24) so angebracht ist, dass sie sich dreht, jedoch in einer Spindel-Innengewinde-Einheit (27, 29) frei axial gleiten kann, die den Abwärtshub und den Aufwärtshub steuert, wobei eine Feder (33) für den Ausgleich der Steigungsdifferenz zwischen dem Gewindebohrer und der Spindel-Innengewinde-Einheit (27, 29) eingefügt ist, wobei diese Feder (33) zwischen einem Ende der Gewindebohrer-Haltestange (24) und einem Ende der Spindel (29) eingefügt ist, **dadurch gekennzeichnet, dass** die Kugelumlaufspindel-Innengewinde-Einheit eine Kugelumlaufspindelmutter (27), die in einem Körper des Spanndorns (21) untergebracht ist, und eine Kugelumlaufspindel (29) umfasst, die betriebsfähig mit der Drehung verbunden ist, jedoch gegenüber der Gewindebohrer-Haltestange (24) axial gleiten kann, und **dadurch**, dass die Feder (33) an einem Verschluss (35) anliegt, der durch Gewindeschneiden (36) innerhalb der Kugelumlaufspindel (29) angebracht ist.

2. Vorrichtung nach Anspruch 1, **dadurch gekennzeichnet, dass** die Gewindebohrer-Haltestange (24) mit einer Halsschraube (32) verbunden ist.

3. Vorrichtung nach Anspruch 1, **dadurch gekennzeichnet, dass** das Getriebe (14) für den Antrieb der Spanndorneinheit (15) ein Spanndornzahnrad (19) umfasst, das leerlaufend mit Hilfe seiner entgegengesetzten Ansätze (23) auf Lagern (22) abgestützt ist und das innen mit einem Loch mit einem quadratischen Querschnitt (in 39) versehen ist, so dass es die Gewindebohrer-Haltestange (24) mit einem äußeren quadratischen Querschnitt beherbergt, die so angebracht ist, dass sie sich dreht, jedoch axial gleiten kann.

## Revendications

1. Dispositif pour la réalisation de trous lors d'opérations de moulage, comprenant un actionneur (12) contraint sur un bâti (13) contenant une transmission (14) pour l'activation d'un groupe de mandrin (15), dans lequel ledit groupe de mandrin (15) comprend une tige porte-poinçon (24) à l'extrémité libre duquel un poinçon (25) est contraint chaque fois vers l'extérieur, ladite tige porte-poinçon (24) et ledit poinçon (25) étant mis en rotation par ledit actionneur (12), dans lequel ladite tige porte-poinçon (24) est contrainte de manière à tourner mais est libre de coulisser axialement à l'intérieur d'un groupe à filetage intérieur-vis (27, 29) qui commande la descente et la montée avec l'interposition d'un ressort (33) pour le rattrapage de la différence de pas entre ledit poinçon et ledit groupe à filetage intérieur-vis (27, 29), ledit ressort (33) étant interposé entre une extrémité de ladite tige porte-poinçon (24) et une extrémité de ladite vis (29), **caractérisé par** ledit groupe à filetage intérieur-vis à recirculation de billes comprenant un écrou fendu femelle-vis à recirculation de billes (27) logé dans un corps du mandrin (21) et une vis à recirculation de billes (29) associée fonctionnellement à la rotation mais libre de coulisser axialement par rapport à ladite tige porte-poinçon (24) ; et par ledit ressort (33) reposant sur une butée (35) contraint au moyen du filetage (36) à l'intérieur de ladite vis à recirculation de billes (29).

2. Dispositif selon la revendication 1, **caractérisé en ce que** ladite tige porte-poinçon (24) est connectée à une vis collet (32).

3. Dispositif selon la revendication 1, **caractérisé en ce que** ladite transmission (14) pour l'activation d'un groupe de mandrin (15) comprend un engrenage de mandrin (19) qui est supporté libre au moyens des ses extensions opposées (23) sur des paliers (22) et qui est perforé intérieurement avec une section carrée (en 39), en logeant ainsi ladite tige porte-poinçon (24), avec une section extérieure carrée, laquelle est contrainte à tourner mais libre de coulisser axialement.
